# EUROPÄISCHE PATENTSCHRIFT

(11) **EP 2 254 921 B1**
(45) Veröffentlichungstag und Bekanntmachung des Hinweises auf die Patenterteilung: **25.04.2012**
(21) Anmeldenummer: 09722353.1
(22) Anmeldetag: 05.02.2009
(51) Int. Cl.: C08F 290/00, C09D 175/00

(54) **STRAHLENHÄRTBARE FORMULIERUNGEN**
RADIATION-CURABLE FORMULATIONS
FORMULATIONS DURCISSABLES PAR RAYONNEMENT

(30) Priorität: 18.03.2008 DE 102008000721
(43) Veröffentlichungstag der Anmeldung: 01.12.2010
(73) Patentinhaber: Evonik Degussa GmbH, 45128 Essen (DE)
(72) Erfinder: SPYROU, Emmanouil, 46514 Schermbeck (DE)
(86) Internationale Anmeldenummer: PCT/EP2009/051299
(87) Internationale Veröffentlichungsnummer: WO 2009/115369

(56) Entgegenhaltungen:
- EP-A- 1 582 910
- EP-A- 1 612 042
- EP-A- 1 630 594
- WO-A-2008/110480
- DE-A1- 10 143 414
- DE-A1- 10 144 531

## Beschreibung

Die vorliegende Erfindung betrifft die Verwendung von Alkoxysilan-Komponenten in radikalisch strahlenhärtbaren Formulierungen, die im ausgehärteten Zustand im besonderen Maße einen Korrosionsschutz für metallische Substrate bieten.

Strahlenhärtbare Formulierungen sind bekannt.

Ethylenische ungesättigte Prepolymere werden z. B. in P. K. T. Oldring (Hrsg.), "Chemistry and Technology of UV- and EB-Formulations for Coatings, Inks and Paints", Vol. II. SITA Technology, London 1991 beschrieben, beispielsweise auf Basis von Epoxyacrylaten (Seiten 31 bis 68), Urethanacrylaten (Seiten 73 bis 123) und Melaminacrylaten (Seiten 208 bis 214). Auch in der Patentliteratur finden solche Formulierungen häufig Erwähnung, exemplarisch seien genannt JP 62110779 und EP 947 565.

Die Beschichtung von metallischen Untergründen stellt ein besonderes Problem für strahlenhärtbare Formulierungen dar, da es aufgrund von Schrumpfungsprozessen zu einem Haftungsverlust kommen kann. Daher werden für solche Untergründe häufig phosphorsäurehaltige Haftvermittler eingesetzt. Beispiele dafür sind US 5,128,387 (Beschichtung von Bierdosen) und JP 2001172554 (Beschichtung von diversen Dosen).

Bekanntermaßen zeigen Epoxyacrylate eine hervorragende Haftung sowie einen guten Korrosionsschutz auf Metalluntergründen. Nachteil solcher Beschichtungen ist aber die geringe Verformbarkeit nach der Aushärtung. Für einige Beschichtungstechnologien, z. B. Coil-Coating ist die Verformbarkeit der beschichteten Werkstücke ohne Bildung von Rissen in der Beschichtung ausschlaggebend. Außerdem neigen solche Beschichtungen aufgrund ihrer aromatischen Anteile zum Vergilben.

WO 2008/110480 betrifft Verfahren zur Beschichtung von metallischen Oberflächen mit einer Polymer/Copolymer sowie Vernetzer und feine anorganische Partikel enthaltenden wässrigen Zusammensetzung.

In EP 1630594 wird eine Versiegelung für Flüssigkristalle und Flüssigkristalldisplays unter Einsatz eines strahlenhärtbaren Harzes offenbart.

EP 1612042 offenbart ein photochromes Laminat umfassend ein thermoplastisches Harz als Basismaterial.

Aus EP 1582910 ist ein Linsenmaterial bekannt, das mindestens eine Verbindung mit einer ethylenisch ungesättigten Gruppe und einer Polydimethylsiloxan-Struktur über eine Urethanbindung aufweist und ein Pyrrolidonderivat enthält.

DE 10143414 betrifft thermisch und mit aktinischer Strahlung härtbare Polysiloxan-Sole.

WO 03/022945 beschreibt niederviskose strahlenhärtbare Formulierungen für Metalluntergründe auf Basis von strahlenhärtbaren Harzen, monofunktionellen Reaktivverdünnern und sauren Haftvermittlern. Die eingesetzten Harze sind dabei übliche, bei verschiedenen Anbietern erhältliche Verkaufsprodukte.

Auch EP 902 040 betrifft strahlenhärtbare Formulierungen. Darin werden Urethan(meth)acrylate mit monofunktionellen Estern einer ungesättigten Carbonsäure beschrieben, welche mit Alkoholen verestert sind, die einen Carbocyclus oder einen Heterocyclus enthalten.

Die aus dem Stand der Technik bekannten Systeme zeigen aber vielfach Nachteile, insbesondere die Verformbarkeit und Korrosionsbeständigkeit erfüllen nicht immer die gestellten Anforderungen.

Aufgabe der vorliegenden Erfindung ist es, strahlenhärtbare, radikalisch vernetzende Formulierungen zu finden, die einerseits nach der Beschichtung gut verformbar, das heißt flexibel sind, andererseits aber auch einen hervorragenden Korrosionsschutz für Metalluntergründe gewährleisten.

Überraschend wurde gefunden, dass die Korrosionsfestigkeit von Lacken auf Basis von strahlenhärtbaren radikalisch vernetzenden Formulierungen auf metallischen Untergründen ansteigt, wenn Alkoxysilan-Komponenten in Kombination mit säuregenerierenden Photoinitiatoren in der Formulierung enthalten sind. Strahlenhärtbare radikalisch vernetzende Formulierungen im Sinne der vorliegenden Erfindung meint Formulierungen, die mit UV-Strahlung, Elektronenstrahlen, Mikrowellenstrahlung, Laserstrahlung oder mittels Plasma gehärtet werden können.

Demgemäß ist Gegenstand der vorliegenden Erfindung die Verwendung von mindestens einer Alkoxysilan-Komponente und mindestens einem säuregenerierenden Photoninitiator in strahlenhärtbaren, radikalisch vernetzbaren Formulierungen, insbesondere in Lacken. Entsprechende strahlenhärtbare, radikalisch vernetzbare Formulierungen sind ebenfalls Gegenstand der vorliegenden Erfindung.

Eine bevorzugte strahlenhärtbare Formulierung gemäß der vorliegenden Erfindung ist insbesondere jene bestehend aus A) mindestens einer strahlenhärtbaren radikalisch vernetzbaren Komponente, B) mindestens 2 Gew.-% mindestens einer Alkoxysilan-Komponente, bezogen auf die Gesamtformulierung, C) mindestens einem säuregenerierenden Photoinitiator, D) optional einem oder mehreren Haftvermittlern, E) optional einem oder mehreren Photoinitiatoren für die radikalische Härtung, und F) optional einem oder mehreren Pigmenten und sonstigen Zuschlagstoffen.

Die erfindungsgemäßen strahlenhärtbaren Formulierungen haben den Vorteil, dass bei Anwendung ein verbesserter Korrosionsschutz bei gleichbleibender guter Flexibilität erreicht wird.

Ein wesentlicher Bestandteil der erfindungsgemäßen Formulierungen ist die strahlenhärtbare radikalisch vernetzbare Komponente A). Als Komponente A kommen monomere, oligomere oder polymere Verbindungen in Frage. Geeignete oligomere und polymere Verbindungen werden vielfach auch als Harze bezeichnet. Je nach Rohstoffbasis können die Harze A) beispielsweise Epoxyacrylate, Polyesteracrylate, Polyetheracrylate, Polyacrylatacrylate, und Urethanacrylate, allein oder in Form von Mischungen, sein. Im Falle der Urethanacrylate können diese z. B. auf Polyestern oder aber auch auf Polyethern basieren. Auch die entsprechenden Methacrylate sind bekannt. Andere polymerisationsfähige Gruppen sind Epoxide und Vinylether. Auch diese können an verschiedenen Basisharzen angebunden sein. Hierbei handelt es sich um für den Fachmann bekannte Systeme. Die Herstellung strahlenhärtbarer Harze, Oligomere und/oder Polymere, und Reaktivverdünner wird z. B. in "Radiation Curing in Polymer Science & Technology, Vol I: Fundamentals and Methods" von J. P. Fouassier, J. F. Rabek, Elsevier Applied Science, London und New York, 1993, Chapter 5, Seiten 226 bis 236, und Seiten 237 bis 240; in "Lackharze", D. Stoye, W. Freitag, Hanser-Verlag, Wien, 1996 , Seite 85, 94-98, 169 und 265 und in der EP 947 565 beschrieben.

Als strahlenhärtbare, radikalisch vernetzbare Komponente A) können auch Monomere, so genannte Reaktivverdünner, eingesetzt werden. Hierbei handelt es sich in der Regel um Acrylat- oder Methacrylat-haltige Stoffe, die bei Raumtemperatur flüssig und damit in der Lage sind, die Gesamtviskosität der Formulierung herabzusetzen. Beispiele für solche Produkte sind insbesondere Isobornylacrylat, Hydroxypropylmethacrylat, Trimethylotpropanformalmonoacrylat, Tetrahydro-fufurylacrylat, Phenoxyethylacrylat Trimethylenpropantriacrylat, Dipropylenglycoldiacrylat, Tripropylenglycoldiacrylat, Hexandioldiacrylat, Pentaerythrittetraacrylat, Laurylacrylat sowie propoxilierte oder ethoxilierte Varianten dieser Reaktivverdünner und/oder urethanisierte Reaktivverdünner wie EBECRYL 1039 (Cytec) und andere. Außerdem in Frage kommen auch andere flüssige Komponenten, die in der Lage sind, unter Bedingungen der radikalischen Polymerisation mit zu reagieren, z. B. Vinylether oder Allylether.

Die Menge A) in der Formulierung variiert von 5 bis 95 Gew.-%, bevorzugt 10 bis 85 Gew.-%. Besonders bevorzugt sind bei den Harzen Polyesterurethanacrylate. Beispiele dafür sind Dynapol R 110 IBOA 75 (Handelsprodukt der Evonik Degussa GmbH, Deutschland, Coatings & Additives) und EBECRYL 1256 (Handelsprodukt von Cytec). Bei den Reaktivverdünnern sind besonders bevorzugt Isobornylacrylat und Hexandioldiacrylat.

Ein weiterer wesentlicher Bestandteil der erfindungsgemäßen Formulierungen ist die Alkoxysilan-Komponente (B). Der Anteil der Alkoxysilan-Komponenten B) an der Gesamtformulierung beträgt insbesondere 2 - 25 Gew.-%, bevorzugt 4 - 15 Gew.-%.
Geeignete Alkoxysilankomponenten B) sind beispielsweise Verbindungen ausgewählt aus der Gruppe umfassend organofunktionelle Silane der allgemeinen Formel I

R¹-SiR'ₙ(OR)₃₋ₙ (I)

worin R¹ eine lineare, verzweigte oder cyclische, gegebenenfalls substituierte Alkylgruppe mit 1 bis 20 C-Atomen darstellt, beispielsweise substituiert mit N-, O-, S-, Halogen-tragenden Gruppen, wie Fluoralkyl, Aminoalkyl, Mercaptoalkyl, Methacryloxyalkyl oder OR, d. h. OH oder Alkoxy, insbesondere Methoxy oder Ethoxy, worin R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist. Gemäß Formel I kann man vorteilhaft Methoxy- oder Ethoxysilane verwenden, die insbesondere eine funktionelle Gruppe R¹ aus der Reihe Methoxy, Ethoxy, Methyl, Ethyl, n-Propyl, i-Propyl, n-Butyl, n-Octyl, i-Octyl, Tridecafluor-1,1,2,2-tetrahydroctyl - um nur einige Beispiele zu nennen - tragen, beispielsweise - aber nicht ausschließlich - Methyltrimethoxysilan, Methyltriethoxysilan, Vinyltrimethoxysilan, Vinyltriethoxysilan, n-Propyltrimethoxysilan, n-Propyltriethoxysilan, n-Octyltrimethoxysilan, n-Octyltriethoxysilan, Hexadecyltrimethoxysilan, Hexadecyltriethoxysilan, Tridecafluor-1,1,2,2-tetrahydrooctyltrimethoxysilan, Tridecafluor-1,1,2,2-tetrahydrooctyltriethoxysilan, Methacryloxypropyltrimethoxysilan, Methacryloxypropyltriethoxysilan, Mercaptopropyltrimethoxysilan, Mercaptopropyltriethoxysilan, Tetramethoxysilan, Tetraethoxysilan.

In einer weiteren Ausführungsform der vorliegenden Erfindung kann die Alkoxysilankomponente B) ausgewählt sein aus Verbindungen der Gruppe umfassend Epoxy-funktionelle Silane der allgemeinen Formel II

R²-SiR'ₘ(OR)₃₋ₘ (II),

worin R² für eine Gruppe 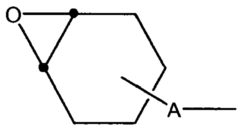 oder 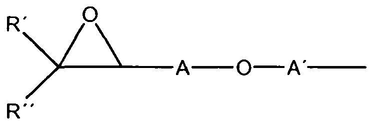 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, Gruppen A und A' gleich oder verschieden sind und jeweils für eine bivalente Alkylgruppe mit 1 bis 10 C-Atomen stehen, vorzugsweise -(CH₂)-, -(CH₂)₂-, -(CH₂)₃-, -(CH₂)(CH)(CH₃)(CH₂)- für A' sowie -(CH₂)- für A, und m gleich 0 oder 1 ist.

Insbesondere bevorzugt ist das Glycidylpropylalkoxysilan der allgemeinen Formel II Glycidyloxypropyltrimethoxy- oder ethoxysilan.

Ebenfalls als Alkoxysilankomponenten geeignet sind Mischungen von Verbindungen der allgemeinen Formel I und/oder II sowie insbesondere auch oligomere Siloxan-Komponenten, insbesondere erhältlich durch kontrollierte Hydrolyse und Kondensation mindestens eines Epoxy-funktionellen Silans der allgemeinen Formel II, gegebenenfalls in Gegenwart von Verbindungen gemäß der Formel I. Die genannten oligomeren Siloxankomponenten werden insbesondere durch Hydrolyse und Kondensation entsprechender Silane in Gegenwart von Borsäure erhalten. Derartige, in der vorliegenden Erfindung in besonderer Weise geeignete Alkoxysilankomponenten sind beispielsweise in DE 102007038314.4 beschrieben, deren Offenbarungsgehalt in der vorliegenden Erfindung unter Bezugnahme mit eingeschlossen ist.

Säure generierende Photoinitiatoren C) werden z. B. in "Radiation Curing in Polymer Science & Technology, Vol II: Photonitiating systems" von J. P. Fouassier, J. F. Rabek, Elsevier Applied Science, London und New York, 1993, Chapter 8 - 10, Seiten 435 bis 554 beschrieben. Solche Photoinitiatoren werden beispielsweise auch in den Patenschriften WO 98/18868, WO 95/17476, US 5,721,020, EP 0721477, EP 0825218, EP 0764691, EP 0764690, EP 0736555, EP 0688804 und EP 0667381 beschrieben, deren Offenbarungsgehalt in der vorliegenden Erfindung unter Bezugnahme mit eingeschlossen ist.

In der Regel handelt es sich dabei um Verbindungen aus der Gruppe umfassend Diaryliodonium-, Ferrocenium- oder Triarylsulphoniumsalze mit Hexafluoroantimonat-, Hexafluorophosphat- oder, Tetrafluoroborat-Anionen. Beispiele für solche unter Strahlung (UV-Strahlung oder Elektronenstrahlung) Säure generierenden Photoinitiatoren sind Deuteron UV 1240, UV 1242 und UV 2257, alle Fa. Deuteron, sowie Irgacure 250, CIBA. Die Menge an C) beträgt in der Regel 0,5 bis 5 Gew.-%, bevorzugt 1-3 Gew.-%, bezogen auf die Gesamtformulierung.

Die unter Strahlung generierte Säure beschleunigt die Aushärtung von Alkoxysilanen, erhöht damit die Vernetzungsdichte und verbessert außerdem die haftungsvermittelnde Wirkung der Alkoxysilane.

Optional können die erfindungsgemäßen Formulierungen Haftvermittler D) enthalten. In der Regel bestehen Haftvermittler für strahlenhärtbare Formulierungen für metallische Untergründe aus Phosphorsäure und/oder Phosphonsäure und/oder deren Umsetzungsprodukten (z. B. Ester) mit funktionalisierten Acrylaten. Während die freien Phosphorsäuregruppen für die direkte Haftung auf dem Metall verantwortlich sind, sorgen die Acrylatgruppen für einen Verbund mit der Beschichtungsmatrix. Solche Produkte werden beispielsweise beschrieben in WO 01/98413, in JP 08231564, und in JP 06313127, deren Offenbarung hiermit unter Bezugnahme mit eingeschlossen ist.

Typische Handelsprodukte sind EBECRYL 169 und 170 von Cytec, ALDITOL Vxl 6219 von VIANOVA, CD 9050 und CD 9052 von Sartomer, SIPOMER PAM-100, SIPOMER PAM-200 und SIPOMER PAM-300 von Rhodia und GENORAD 40 von Rahn. Die Menge an C) in der Formulierung beträgt 0,1 bis 10 Gew.-%, bevorzugt von 1 bis 5 Gew.-%.

Ebenfalls in den erfindungsgemäßen Formulierungen können Photoinitiatoren für die radikalische Härtung E) enthalten sein. Geeignete Photoinitiatoren und ihre Herstellung werden z. B. in "Radiation Curing in Polymer Science & Technology, Vol II: Photoinitiating Systems" von J. P. Fouassier, J. F. Rabek, Elsevier Applied Science, London und New York, 1993, Seiten 1 - 374, beschrieben. Häufig handelt es sich hierbei um α-Hydroxyketone bzw. Derivate dieser. Die Photoinitiatoren können, falls vorhanden, in Mengen von 0,2 bis 10 Gew.-% enthalten sein. Solche, Radikale generierende Photoinitiatoren beschleunigen die Aushärtung unter UV-Strahlung, werden aber bei Einsatz von Elektronenstrahlen nicht benötigt, da hier die Startradikale auch ohne Photoinitiatoren entstehen.

Geeignete Pigmente F) für strahlenhärtbare Formulierungen gemäß der vorliegenden Erfindung werden, z. B. in "Radiation Curing in Polymer Science & Technology, Vol IV: Practical Aspects and Application" von J. P. Fouassier, J. F. Rabek , Elsevier Applied Science, London und New York, 1993, Chapter 5, Seiten 87 bis 105 beschrieben und können in Mengen von 1 bis 40 Gew.-% enthalten sein. Beispiele für Korrosionsschutzpigmente findet man z. B. in Pigment + Füllstoff Tabellen, O. Lückert, Vincentz Verlag Hannover, 6. Auflage 2002. Beispielhaft seien genannt: SHIELDEX C 303 (Grace Davison) und HALOX Coil X 100, HALOX Coil X 200 und HALOX CW 491 (Erbslöh), HEUCOPHOS SAPP oder auch ZPA (Heubach), K-White TC 720 (Tayca) und HOMBICOR (Sachtleben). Natürlich kommen auch einfache anorganische Salze wie z. B. Zinkphosphat in Betracht.

Sonstige Zuschlagstoffe F) für strahlenhärtbare Formulierungen gibt es in verschiedenen Zusammensetzungen und für diverse Zwecke, z. B. Verlaufsmittel, Mattierungsmittel, Entgasungsmittel und andere.

Einige von Ihnen werden beschrieben in der Broschüre "SELECTED DEGUSSA PRODUCTS FOR RADIATION CURING AND PRINTING INKS", herausgegeben von der Tego Coating & Ink Additives, Essen, 2006. Die Menge an solchen Additiven variiert von 0,01 bis 5 Gew.-%, falls vorhanden.

Die Herstellung der erfindungsgemäßen Formulierungen erfolgt durch Mischen der einzelnen Formulierungsbestandteile. Hierfür eignen sich alle dem Fachmann bekannten Arten zur Herstellung derartiger Formulierungen. In der einfachsten Ausführungsform werden die oben beschriebenen Formulierungsbestandteile mittels eines Rührers, z. B eines Magnetrührers, miteinander vermischt.

Ein weiterer Gegenstand der vorliegenden Erfindung ist die Verwendung der erfindungsgemäßen strahlenhärtbaren Formulierungen als Primer, Zwischenschicht, Decklack, Klarlack und/oder in Beschichtungen. Insbesondere bevorzugt ist die Verwendung einer strahlenhärtbaren Formulierung, bestehend aus
A) mindestens einer strahlenhärtbaren, radikalisch vernetzbaren Komponente,
B) mindestens 2 Gew.-% mindestens einer Alkoxysilan-Komponenten bezogen auf die Gesamtformulierung,
C) mindestens einem Säure generierendem Photoinitiator
D) optional einem Haftvermittler,
E) optional Photoinitiatoren für die radikalische Härtung,
F) optional Pigmenten und sonstigen Zuschlagstoffen, als Primer, Zwischenschicht, Decklack und/oder Klarlack.

Bei den genannten Anwendungen erfolgt insbesondere eine nachfolgende Lagerung bzw. Erwärmung der mit Strahlung ausgehärteten Beschichtung zwischen Raumtemperatur und 100 °C mit einer Lagerungs- bzw. Erwärmungsdauer zwischen 5 min und vier Wochen.

Dies führt zu einem verbessertem Umsatz der Alkoxysilangruppen und damit zu erhöhter Vernetzungsdichte und verbesserter Haftung. Dies resultiert auch in einer erhöhten Korrosionsfestigkeit.

Bevorzugt ist eine Lagerung von 1 Tag (bei Raumtemperatur) und 1 h (bei 80 °C).

Die Auftragung der strahlenhärtbaren Formulierung kann durch in der Lacktechnologie bekannte Applikationstechniken erfolgen, z. B. Rakeln, Walzen, Sprühen oder Spritzen.

Als metallischer Untergrund eignet sich vor allem Stahl, optional vorbehandelt, aber auch Aluminium und sonstige Metalle oder Legierungen, die aus Korrosionsschutzgründen mit einer Beschichtung versehen werden.

Die Aushärtung erfolgt in Anwesenheit von Photoinitiatoren unter UV-Licht oder in Abwesenheit von Photoinitiatoren durch radikalische Härtung unter Elektronenstrahlen. Auch eine Aushärtung im Plasma oder unter Mikrowelleneinstrahlung ist möglich. Die Eigenschaften der ausgehärteten Lacke sind weitgehend unabhängig von der Aushärtungsmethode.

UV-Härtung und UV-Lampen werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 8, Seiten 453 bis 503. Elektronenstrahlhärtung und -härter werden z. B. beschrieben in "Radiation Curing in Polymer Science & Technology, Vol I: Fundamentals and Methods" von J. P. Fouassier, J. F. Rabek , Elsevier Applied Science, London und New York, 1993, Chapter 4, Seiten 193 bis 225 und in Chapter 9, Seiten 503 bis 555.

Ebenfalls Gegenstand der Erfindung ist die Verwendung einer erfindungsgemäßen strahlenhärtbaren Formulierung zur Herstellung von Beschichtungen nach dem Coil Coating-Verfahren, wobei die vorab beschriebenen Vorzugsformen auch für diesen Gegenstand der vorliegenden Erfindung angewendet werden können.

Ein weiterer Gegenstand der vorliegenden Erfindung sind Beschichtungen enthaltend oder basierend auf strahlenhärtbaren Formulierungen gemäß der vorliegenden Erfindung. Dabei sind im Rahmen der vorliegenden Erfindung auch und insbesondere die gehärteten Beschichtungen enthaltend oder basierend auf strahlenhärtbaren Formulierungen mit umfasst.

Die erfindungsgemäße Beschichtung kann entweder allein verwendet werden, oder eine Schicht eines Mehrschichtaufbaus sein. Sie kann beispielsweise als Primer, als Zwischenschicht oder als Deck- oder Klarlack aufgetragen sein. Die über oder unter der erfindungsgemäßen Beschichtung liegenden Schichten können entweder konventionell thermisch ausgehärtet werden, oder aber auch durch Strahlung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

| **Einsatzstoffe** | **Produktbeschreibung, Hersteller** |
|---|---|
| Dynapol R 110 - IBOA 75 | Strahlenhärtbares Harz, Evonik Degussa GmbH, Coatings & Colorants, gelöst in 25 % IBOA |
| IBOA | Isobornylacrylat, Cytec, monofunktioneller Reaktivverdünner |
| IRGACURE 184 | Photoinitiator für radikalische Härtung, Ciba |
| IRGACURE 250 | Säure generierender Photoinitiator, Ciba. |
| PZ 20 | Zinkphosphat, SNCZ (Societe nouvelle des couleurs zinciques) |
| Kronos 2059 | Titandioxid, Kronos |
| Dynasilan GLYMO | 3-Glycidyloxypropyltrimethoxysilan, Evonik Degussa GmbH |

### Allgemeine Herstellvorschrift zur Formulierung und Aushärtung von UV-Lacken

Alle Formulierungsbestandteile werden zusammengegeben und 20 min mittels eines Magnetrührers gerührt.

Die gebrauchsfähige Formulierung wird auf Stahlbleche, (Bonder Bleche 1303) aufgerakelt und nachfolgend unter einer UV-Lampe (3 m/min, Minicure, Quecksilberdampflampe, 80 W/cm, Technigraf) ausgehärtet.

Alle Angaben in Gew.-% sind bezogen auf das Gesamtgewicht der Formulierung.

| **Versuch** | **1** | **2** | **3*** | **4*** |
|---|---|---|---|---|
| Dynapol R 110 - IBOA 75 | 48,5 | 48,5 | 48,5 | 48,5 |
| IBOA | 25,5 | 25,5 | 28,5 | 28,5 |
| Dynasilan Glymo | 5,0 | 5,0 | 5,0 | 5,0 |
| Irgacure 250 | 3,0 | 3,0 | 0 | 0 |
| PZ 20 | 10,0 | 10,0 | 10,0 | 10,0 |
| Kronos 2059 | 5,0 | 5,0 | 5,0 | 5,0 |
| IRGACURE 184 | 3,0 | 3,0 | 3,0 | 3,0 |
| Härtung | UV | UV + 4h 80 °C | UV | UV+4h80°C |
| 240 h Salzsprühtest (Unterwanderung [cm]) | 3,5 | 1,3 | 11,9 | 10,2 |
| Erichsentiefung [mm] | 9,5 | 9,0 | 11,0 | 10,5 |
| Schichtdicke [µm] | 27-31 | 25 - 27 | 28-33 | 31 - 34 |

| | | | | |
|---|---|---|---|---|
| * Nicht erfindungsgemäße Vergleichsversuche | | | | |

Alle Lacke weisen eine ausreichende Flexibilität auf ((Erichsentiefung (DIN 53156) > 5 mm). Lediglich die erfindungsgemäßen Formulierungen zeigen einen ausreichenden Korrosionsschutz (Unterwanderung < 5 cm) nach 240 h Salzsprühtest (DIN 53167).

## Patentansprüche

1. Verwendung von mindestens einer Alkoxysilan-Komponente und mindestens einem säuregenerierenden Photoninitiator in strahlenhärtbaren, radikalisch vernetzbaren Formulierungen.

2. Strahlenhärtbare, radikalisch vernetzbare Formulierungen bestehend aus A) mindestens einer strahlenhärtbaren radikalisch vernetzbaren Komponente, B) mindestens 2 Gew.-% mindestens einer Alkoxysilan-Komponente, bezogen auf die Gesamtformulierung, C) mindestens einem säuregenerierenden Photoinitiator, D) optional einem oder mehreren Haftvermittlern, E) optional einem oder mehreren Photoinitiatoren für die radikalische Härtung, und F) optional einem oder mehreren Pigmenten und sonstigen Zuschlagstoffen.

3. Strahlenhärtbare Formulierungen gemäß Anspruch 2, **dadurch gekennzeichnet, dass** die Komponente A) aus Epoxyacrylaten, Polyesteracrylaten, Polyetheracrylaten, Polyacrylatacrylaten, und Urethanacrylaten, allein oder in Form von Mischungen, ausgewählt ist.

4. Strahlenhärtbare Formulierungen gemäß Anspruch 2 oder 3, **dadurch gekennzeichnet, dass** die Alkoxysilankomponente ausgewählt ist aus der Gruppe umfassend organofunktionelle Silane der allgemeinen Formel I
R¹-SiR'ₙ(OR)₃₋ₙ (I)
worin R¹ eine lineare, verzweigte oder cyclische, gegebenenfalls substituierte Alkylgruppe mit 1 bis 20 C-Atomen darstellt, beispielsweise substituiert mit N-, O-, S-, Halogen-tragenden Gruppen, wie Fluoralkyl, Aminoalkyl, Mercaptoalkyl, Methacryloxyalkyl oder OR, d. h. OH oder Alkoxy, insbesondere Methoxy oder Ethoxy, worin R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist,
und/oder ausgewählt ist aus der Gruppe umfassend Epoxy-funktionelle Silane der allgemeinen Formel II
R²-SiR'ₘ(OR)₃₋ₘ (II),
worin R² für eine Gruppe 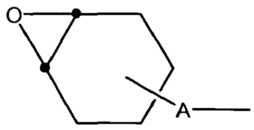 oder 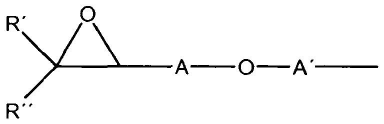 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, Gruppen A und A' gleich oder verschieden sind und jeweils für eine bivalente Alkylgruppe mit 1 bis 10 C-Atomen stehen, und m gleich 0 oder 1 ist.

5. Strahlenhärtbare Formulierungen gemäß einem oder mehreren der Ansprüche 2 bis 4, **dadurch gekennzeichnet, dass** die Allkoxysilankomponente oligomere Siloxan-Komponenten, erhältlich durch Hydrolyse und Kondensation mindestens eines Epoxy-funktionellen Silans der allgemeinen Formel II, gegebenenfalls in Gegenwart von Verbindungen gemäß der Formel I umfasst.

6. Strahlenhärtbare Formulierungen gemäß einem oder mehreren der Ansprüche 2 bis 5, **dadurch gekennzeichnet, dass** der säuregenerierende Photoinitiator ausgewählt ist aus der Gruppe umfassend Diaryliodonium-, Ferrocenium- oder Triarylsulphoniumsalze mit Hexafluoroantimonat-, Hexafluorophosphat- oder, Tetrafluoroborat-Anionen.

7. Verwendung von strahlenhärtbaren Formulierungen gemäß einem oder mehreren der Ansprüche 2 bis 6 als Primer, Zwischenschicht, Decklack, Klarlack und/oder in Beschichtungen oder zur Herstellung von Beschichtungen nach dem Coil Coating-Verfahren.

8. Verwendung gemäß Anspruch 7, **dadurch gekennzeichnet, dass** eine nachfolgende Lagerung bzw. Erwärmung der mit Strahlung ausgehärteten Beschichtung zwischen Raumtemperatur und 100 °C mit einer Lagerungs- bzw. Erwärmungsdauer zwischen 5 min und vier Wochen erfolgt.

9. Beschichtungen enthaltend oder basierend auf strahlenhärtbaren Formulierungen gemäß einem oder mehreren der Ansprüche 2 bis 6.

## Claims

1. Use of at least one alkoxysilane component and at least one acid-generating photoinitiator in radiation-curable, free-radically crosslinkable formulations.

2. Radiation-curable, free-radically crosslinkable formulations composed of A) at least one radiation-curable free-radically crosslinkable component, B) at least 2% by weight of at least one alkoxysilane component, based on the total formulation, C) at least one acid-generating photoinitiator, D) optionally one or more adhesion promoters, E) optionally one or more photoinitiators for free-radical curing, and F) optionally one or more pigments and other adjuvants.

3. Radiation-curable formulations according to Claim 2, **characterized in that** component A) is selected from epoxy acrylates, polyester acrylates, polyether acrylates, polyacrylate acrylates, and urethane acrylates, alone or in the form of a mixture.

4. Radiation-curable formulations according to Claim 2 or 3, **characterized in that** the alkoxysilane component is selected from the group consisting of organofunctional silanes of the general formula I
R¹-SiR'ₙ(OR)₃₋ₙ (I)
in which R¹ is a linear, branched or cyclic, unsubstituted or substituted alkyl group having 1 to 20 C atoms, substituted for example by N-, O-, S- or halogen-bearing groups, such as fluoroalkyl, aminoalkyl, mercaptoalkyl, methacryloyloxyalkyl or OR, i.e. OH or alkoxy, more particularly methoxy or ethoxy, in which R' is methyl, groups R independently are a hydrogen or are a linear, branched or cyclic alkyl group having 1 to 6 C atoms, and n is 0 or 1,
and/or is selected from the group consisting of epoxy-functional silanes of the general formula II
R²-SiR'ₘ(OR)₃₋ₘ (II),
in which R² is a group 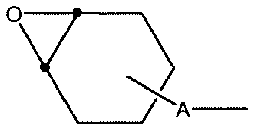 or 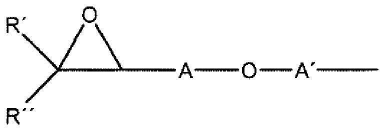 and the groups R, R' and R" are alike or different and in each case are a hydrogen (H) or are a linear, branched or cyclic, unsubstituted or substituted alkyl group having 1 to 6 C atoms, groups A and A' are alike or different and in each case are a divalent alkyl group having 1 to 10 C atoms, and m is 0 or 1.

5. Radiation-curable formulations according to one or more of Claims 2 to 4, **characterized in that** the alkoxysilane component comprises oligomeric siloxane components obtainable by hydrolysis and condensation of at least one epoxy-functional silane of the general formula II, if desired in the presence of compounds according to the formula I.

6. Radiation-curable formulations according to one or more of Claims 2 to 5, **characterized in that** the acid-generating photoinitiator is selected from the group consisting of diaryliodonium, ferrocenium or triarylsulphonium salts having hexafluoroantimonate, hexafluorophosphate or tetrafluoroborate anions.

7. Use of radiation-curable formulations according to one or more of Claims 2 to 6 as primer, intercoat, topcoat or clearcoat material and/or in coatings or for producing coatings by the coil coating process.

8. Use according to Claim 7, **characterized in that** the radiation-cured coating is subsequently stored and/or heated at between room temperature and 100°C, with a storage and/or heating time of between 5 min and four weeks.

9. Coatings containing or based on radiation-curable formulations according to one or more of Claims 2 to 6.

## Revendications

1. Utilisation d'au moins un composant alcoxysilane et d'au moins un photoinitiateur générant des acides dans des formulations durcissables par rayonnement, réticulables par voie radicalaire.

2. Formulations durcissables par rayonnement, réticulables par voie radicalaire, constituées par A) au moins un composant durcissable par rayonnement, réticulable par voie radicalaire, B) au moins 2% en poids d'au moins un composant alcoxysilane, par rapport à l'ensemble de la formulation, C) au moins un photoinitiateur générant des acides, D) éventuellement un ou plusieurs promoteurs d'adhésion, E) éventuellement un ou plusieurs photoinitiateurs pour le durcissement radicalaire, et F) éventuellement un ou plusieurs pigments et autres additifs.

3. Formulations durcissables par rayonnement selon la revendication 2, **caractérisées en ce que** le composant A) est choisi parmi les acrylates d'époxy, les acrylates de polyester, les acrylates de polyéther, les acrylates de polyacrylate et les acrylates d'uréthane, seuls ou sous la forme de mélanges.

4. Formulations durcissables par rayonnement selon la revendication 2 ou 3, **caractérisées en ce que** le composant alcoxysilane est choisi dans le groupe comprenant les silanes organofonctionnels de formule générale I
R¹-SiR'ₙ(OR)₃₋ₙ (I)
dans laquelle R¹ représente un groupe alkyle linéaire, ramifié ou cyclique, éventuellement substitué, de 1 à 20 atomes C, par exemple substitué avec des groupes portant N, O, S, halogène, tels que fluoroalkyle, aminoalkyle, mercaptoalkyle, méthacryloxyalkyle ou OR, c.-à-d. OH ou alcoxy, notamment méthoxy ou éthoxy, dans laquelle R' signifie méthyle, les groupes R représentent indépendamment un hydrogène ou un groupe alkyle linéaire, ramifié ou cyclique de 1 à 6 atomes C,
et n vaut 0 ou 1,
et/ou choisi dans le groupe comprenant les silanes à fonction époxy de formule générale II
R²-SiR'ₘ(OR)₃₋ₘ (II)
dans laquelle R² représente un groupe 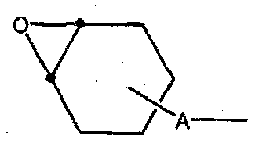 ou 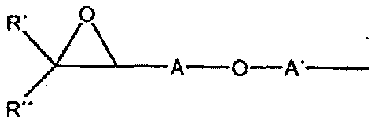 et les groupes R, R' et R" sont identiques ou différents et représentent chacun un hydrogène (H) ou un groupe alkyle linéaire, ramifié ou cyclique, éventuellement substitué, de 1 à 6 atomes C, les groupes A et A' sont identiques ou différents et représentent chacun un groupe alkyle bivalent de 1 à 10 atomes C, et m vaut 0 ou 1.

5. Formulations durcissables par rayonnement selon une ou plusieurs des revendications 2 à 4, **caractérisées en ce que** le composant alcoxysilane comprend des composants siloxane oligomères, pouvant être obtenus par hydrolyse et condensation d'au moins un silane à fonction époxy de formule générale II, éventuellement en présence de composés de formule générale I.

6. Formulations durcissables par rayonnement selon une ou plusieurs des revendications 2 à 5, **caractérisées en ce que** le photoinitiateur générant des acides est choisi dans le groupe comprenant les sels de diaryliodonium, ferrocénium ou triarylsulfonium avec des anions hexafluoroantimonate, hexafluorophosphate ou tétrafluoroborate.

7. Utilisation de formulations durcissables par rayonnement selon une ou plusieurs des revendications 2 à 6 en tant qu'amorce, couche intermédiaire, laque de revêtement, laque transparente et/ou dans des revêtements ou pour la fabrication de revêtements par le procédé de revêtement en continu.

8. Utilisation selon la revendication 7, **caractérisée en ce qu'**un stockage ou un réchauffement ultérieur du revêtement durci par rayonnement entre la température ambiante et 100°C avec une durée de stockage ou de réchauffement comprise entre 5 min et quatre semaines a lieu.

9. Revêtements contenant des ou à base de formulations durcissables par rayonnement selon une ou plusieurs des revendications 2 à 6.
